# EUROPÄISCHE PATENTSCHRIFT

(11) **EP 0 986 768 B1**
(45) Veröffentlichungstag und Bekanntmachung des Hinweises auf die Patenterteilung: **10.09.2003**
(21) Anmeldenummer: 98921328.5
(22) Anmeldetag: 03.06.1998
(51) Int. Cl.: G02B 6/12

(54) **STREIFENWELLENLEITER UND VERFAHREN ZU SEINER HERSTELLUNG**
Strip Waveguide and Method for Manufacturing the Waveguide
GUIDE D'ONDES A BANDE ET PROCEDE PERMETTANT DE LE PRODUIRE

(30) Priorität: 04.06.1997 CH 134197
(43) Veröffentlichungstag der Anmeldung: 22.03.2000
(73) Patentinhaber: Rainbow Photonics AG, 8093 Zürich (CH)
(72) Erfinder: FLUCK, Daniel, CH-8442 Hettlingen (CH); PLISKA, Thomas, CH-8304 Wallisellen (CH); GÜNTER, Peter, CH-8173 Riedt bei Neerach (CH)
(74) Vertreter: Frei, Alexandra Sarah
(86) Internationale Anmeldenummer: CH9800239
(87) Internationale Veröffentlichungsnummer: WO98055889

(56) Entgegenhaltungen:
- DE-A- 19 503 931
- US-A- 4 789 642
- FLUCK D ET AL: "MODELING OF REFRACTIVE INDEX PROFILES OF HE+ION-IMPLANTED KNBO3 WAVEGUIDES BASED ON THE IRRADIATION PARAMETERS" JOURNAL OF APPLIED PHYSICS, Bd. 74, Nr. 10, 15. November 1993, Seiten 6023-6031, XP000406707
- FLUCK D ET AL: "BLUE-LIGHT SECOND-HARMONIC GENERATION IN ION-IMPLANTED KNBO3 CHANNEL WAVEGUIDES OF NEW DESIGN" APPLIED PHYSICS LETTERS, Bd. 69, Nr. 27, 30. Dezember 1996, Seiten 4133-4135, XP000643706 in der Anmeldung erwähnt

## Beschreibung

Die Erfindung betrifft einen Streifenwellenleiter, ein Verfahren zu seiner Herstellung, seine Verwendung sowie eine diesen Streifenwellenleiter enthaltende Lichtquelle gemäss den Oberbegriffen der unabhängigen Patentansprüche.

Frequenzkonversion von Laserlicht durch nichtlinear-optische Wechselwirkungen hat seit den sechziger Jahren einige Aufmerksamkeit gefunden. Nichtlinear-optische Prozesse ermöglichen die Erzeugung von kohärentem Laserlicht bei optischen Frequenzen (Wellenlängen), welche nicht oder nur schwerlich durch einen direkten Laserprozess generiert werden können. Im allgemeinen wird für einen solchen Frequenzumwandlungsprozess ein Laser als Pumpquelle verwendet, dessen Lichtstrahl durch ein nichtlinear-optisches Material propagiert. Die nichtlinear-optische Wechselwirkung zwischen Laserstrahl und Material führt dazu, dass ein Teil des Pumplichts in Licht höherer oder niedrigerer Frequenz umgewandelt wird. Unter den nichtlinear-optischen Prozessen sind die Frequenzverdopplung (Second harmonic generation, SHG), Summenfrequenzerzeugung (Sum frequency generation, SFG), Differenzfrequenzerzeugung (Difference frequency generation, DFG) und Optisch Parametrische Verstärkung (Optical parameteric amplification, OPA) von besonderer Bedeutung. Diese Prozesse ermöglichen die Erzeugung kohärenter Laserstrahlung im ultravioletten, sichtbaren, nahen und mittleren infraroten Spektralbereich, d.h. zwischen 0.1 µm und 10 µm Wellenlänge. Laser, die bei diesen Wellenlängen Licht emittieren, finden Anwendungen in Spektroskopie, optischer Datenspeicherung, Medizin, Biologie, usw.

Ein weiterer wichtiger nichtlinear-optischer Prozess ist die elektro-optische Modulation von Laserlicht. Dabei wird an den nichtlinear-optischen Kristall ein elektrisches Feld angelegt und dadurch die Intensität oder Ausbreitungsgeschwindigkeit des Laserlichts beeinflusst. Dieser Effekt kann dazu verwendet werden, elektronische Signale auf den optischen Strahl zu übertragen. Dies erlaubt die Übertragung von Informationen mit Hilfe von optischen Systemen, was heute in der Kommunikationstechnik verbreitet Anwendung findet. Daneben wird der elektro-optische Effekt für verschiedene weitere Anwendungen ausgenützt, etwa in optischen Schaltern oder in Güteschalter in Lasern für die Erzeugung sehr kurzer Lichtpulse.

Eine grosse Anzahl kristalliner Materialien, welche sich für nichtlinear-optische Wechselwirkungen eignen, wurde untersucht. Unter diesen hat besonders die Klasse der ferroelektrischen Oxide Aufmerksamkeit gefunden, z.B. Kaliumniobat (KNbO₃), Lithiumnoibat (LiNbO₃), Lithiumtantalat (LiTaO₃), Bariumtitant (BaTiO₃) und KTP (KTiOPO₄). Im allgemeinen weisen Kristalle dieser Materialien grosse nichtlinear-optische Suszeptibilitäten auf, eine Materialeigenschaft, die eine notwendige Voraussetzung für effiziente Frequenzkonversion und elektro-optische Modulation darstellt. Insbesondere Kaliumniobat hat sich aufgrund seiner vorzüglichen Eigenschaften als ausgezeichnetes Material für nichtlinear-optische Anwendungen erwiesen.

Eine weitere Klasse von Materialien, welche interessante nichtlinear-optische Eigenschaften aufweist, sind Kristalle beruhend auf Boratverbindungen wie β-BaB₂O₄ (BBO), LiB₃O₅ (LBO), CsB₃O₅ (CBO) und CsLiB₆O₁₀ (CLBO). Diese Gruppe von nichtlinear-optischen Kristallen zeichnet sich dadurch aus, dass ihre optische Transparenz im Gegensatz zu den meisten ferroelektrischen Oxiden weit in den ultravioletten Spektralbereich reicht. Aufgrund dieser Eigenschaft sind Boratkristalle interessant für Frequenzkonversion, bei der ultraviolette Laserstrahlung erzeugt wird.

Der Umwandlungsgrad bei einem nichtlinear-optischen Prozess steigt mit der Wechselwirkungslänge von Pumpstrahl und Kristall und mit der Intensität des Pumpstrahls. Um einen hohen Umwandlungsgrad zu erreichen, müssen deshalb oft zusätzliche Massnahmen getroffen werden, um die Intensität des Pumpstrahls zu erhöhen, insbesondere dann, wenn der Laser im Dauerstrich-Mode (continuous-wave, cw) betrieben wird. Als derartige Massnahmen wurden vor allem resonante Prozesse in optischen Kavitäten und Konversionsprozesse in optischen Wellenleitern untersucht. Resonante Umwandlungsprozesse, bei denen der nichtlinear-optische Kristall in einer Kavität plaziert wird, bieten die Möglichkeit, sehr hohe Umwandlungsgrade zu erzielen. Sie weisen aber den Nachteil auf, dass sie sehr empfindlich auf die mechanische Justierung der optischen Bauteile und auf geringe Schwankungen der Pumpstrahlwellenlänge sind. Sie benötigen deshalb normalerweise ein kompliziertes aktives Rückkoppelsystem zur Stabilisierung. Demgegenüber weist die Verwendung von Wellenleitern für Frequenzkonversion den Vorteil auf, allein aufgrund der sehr kleinen Querschnittsfläche des Wellenleiters und der seitlichen Führung des Lichtstrahls eine hohe Intensität über eine lange Wechselwirkungslänge zu gewährleisten und so einen hohen Umwandlungsgrad zu erzielen. Dabei genügt bereits ein einzelner Durchgang des Pumpstrahls durch den Wellenleiter, was die Anforderungen an die mechanische und frequenzmässige Stabilität gegenüber optischen Kavitäten stark vermindert.

Wellenleiter bieten ebenfalls Vorteile für elektro-optische Anwendungen gegenüber Volumenkristallen. Durch die Begrenzung des Lichts auf eine sehr kleine Fläche über eine lange Distanz kann die für die Modulation angelegte elektrische Spannung sehr klein gehalten werden, wodurch die benötigte elektrische Leistung stark vermindert wird. Wellenleiter sind zudem kompatibel mit der Glasfasertechnologie, welche in heutigen Kommunikationssystemen verwendet wird.

Von besonderer Bedeutung für Anwendungen sind Streifenwellenleiter, d.h. kanalförmige Wellenleiter, die das Licht in zwei Richtungen führen und auf eine sehr kleine Fläche begrenzen.

Die obigen Ausführungen unterstreichen die Bedeutung von Wellenleitern, insbesondere Streifenwellenleitern, für nichtlinear-optische Anwendungen. Die Herstellungsverfahren solcher Wellenleiter sind oft jedoch technologisch schwierig und müssen den jeweiligen Materialeigenschaften angepasst werden. Diese Erfindung beruht auf einem Verfahren, welches die Fabrikation von Wellenleitern guter optischer Qualität in nichtlinear-optischen Kristallen erlaubt unter Bewahrung der vorteilhaften Eigenschaften dieser Materialien.

Für die Herstellung von optischen Wellenleitern in nichtlinear-optischen Kristallen wurden verschiedenartige Methoden untersucht, sowohl chemische als auch physikalische. Durch loneneindiffusions- oder Ionenaustauchvorgänge im nichtlinear-optischen Kristall gelang es beispielsweise, Wellenleiter in LiNbO₃, LiTaO₃ und KTP herzustellen. Als erfolgreich hat sich etwa die Eindiffusion oder Implantation von Titan (Ti) in LiNbO₃ erwiesen. Im Ti-dotierten Bereich ist der Brechungsindex angehoben, während zugleich die erwünschten optischen Eigenschften des LiNbO₃ erhalten bleiben. Fast alle anderen nichlinear-optischen Kristalle sind diesem Verfahren jedoch nicht zugänglich, weil die Fremdionen-Diffusionskonstanten und die thermische Beständigkeit nicht ausreichen. Auch das Zwangsdotieren mit Hilfe der Ionenimplantation führt nicht zum Ziel, denn die Ionenimplantation von schweren Ionen wie Ti schädigt das Wirtsgitter durch Atomstösse und erzeugt Defekte, so dass keine nutzbaren Wellenleiter entstehen. Unter den physikalischen Methoden hat vor allem die Implantation von leichten Ionen wie H⁺ oder He⁺ Anwendung gefunden. Bei diesem Verfahren wird das kristalline Material einem Beschuss von hochenergetischen Ionen ausgesetzt. Dies führt zur Bildung einer vergrabenen optischen Barriere, d.h. einem Bereich mit abgesenktem Brechungsindex, und einer wellenleitenden Schicht unter der Oberfläche des Kristalls.

Fluck u.a. haben in der Publikation "Low-loss optical channel waveguides in KNbO₃ by multiple energy ion implantation" (J. Appl. Phys. 72 (5), 1671 (1992)) gezeigt, dass die Herstellung von Streifenwellenleitern durch lonenimplantation, z.B. in ferroelektrischen Oxiden wie KNbO₃, mit einem Verfahren, welches mehrere Implantationsschritte verwendet, möglich ist. Die so hergestellten Streifenwellenleiter weisen aber den Nachteil auf, dass sie nur Licht einer Polarisationsrichtung führen. während Licht mit dazu senkrechter Polarisation im Wellenleiter nicht propagiert. Um aber Frequenzkonversion in KNbO₃ zu ermöglichen,muss der Wellenleiter notwendigerweise Licht sowohl senkrechter als auch waagrechter Polarisation führen. In der Publikation "Blue-light second-harmonic generation in ion-implanted channel waveguides of new design" (Appl. Phys. Lett. 69 (27), 4133 (1996)) haben Fluck u.a. ein einfacheres Verfahren beschrieben, welches mit nur einem Implantationsschritt die Fabrikation von Streifenwellenleitern erlaubt. Dieses Verfahren ist Gegenstand der deutschen Patentanmeldung "Wellen- oder Streifenleiter, sowie Verfahren zu seiner Herstellung". Streifenwellenleiter, die mit diesem Verfahren hergestellt werden, weisen deutlich verbesserte optische Eigenschften auf gegenüber Wellenleitern, welche mit mehreren Implantionsschritten hergestellt werden. Aufgrund der schmalen optischen Barriere an den Seitenwänden besitzen sie jedoch eine verhälmismässig hohe Dämpfung.

In der Patentschrift "Method for fabrication low loss crystalline silicon waveguides by dielectric implantation" (US-4,789,642) von Lorenzo u.a. wird ein Verfahren beschrieben, welches mittels Ionenimplantation und Ätzen die Herstellung von Streifenwellenleitern ermöglicht. Dabei wird ein Siliziumsubstrat dem Beschuss von hochenergetischen Sauerstoff- oder Stickstoffionen ausgesetzt. Diese Ionen bilden in einer bestimmten Tiefe unterhalb der Oberfläche des Siliziumsubstrats eine kristalline dielektrische Schicht aus Siliziumoxid (SiO₂) oder Siliziumnitrid (Si₃N₄), welche gegenüber der darüberliegenden Siliziumschicht einen stark abgesenkten Brechungsindex aufweist. Durch Ätzen oder epitaktisches Aufwachsen von zusätzlichem Silizium an geeigneten Stellen können sodann Rippen auf der Substratoberfläche und somit Streifenwellenleiter gebildet werden. Dieses Verfahren beruht jedoch auf den besonderen Materialeigenschaften von Silizium, wo die Implantation von schweren Ionen wie Sauerstoff oder Stickstoff die Bildung einer kristallinen Oxid- oder Nitridschicht und somit eine chemische Veränderung des Materials bewirkt. Im Gegensatz dazu führt die Implantation von leichten Ionen wie Protonen oder Helium in ein ferroelektrisches Oxid, z.B. KNbO₃, oder Borat, z.B. LBO, zur Bildung einer teilweise oder völlig amorphen Schädigungszone durch Atomstösse, nicht aber einer chemischen Veränderung des Materials. Dies gilt ebenso für die Implantation von schweren Ionen. Das Verfahren von Lorenzo u.a. ist somit nicht auf ferroelektrische Oxide oder Borate übertragbar. Zudem bezieht sich diese Patentschrift ausschliesslich auf Wellenleiter in Silizium für Anwendungen in der Kommunikations-Technologie bei Lichtwellenlängen zwischen 1.3 und 1.6 µm. Wegen der Eigenschaften von Silizium können diese Wellenleiter jedoch nicht für Frequenzkonversionprozesse verwendet werden.

Es ist Aufgabe der Erfindung, einen Streifenwellenleiter guter optischer Qualität in einem Kristall, insbesondere einem ferroelektrischen Oxid oder einem Borat, zu schaffen. Im weiteren ist es Aufgabe der Erfindung, ein Verfahren anzugeben, welches die Fabrikation solcher Wellenleiter ermöglicht. Sodann ist es Aufgabe der Erfindung, die Verwendung dieser Streifenwellenleiter für die effiziente Frequenzkonversion von Halhleiterdiodenlasern und von Festkörperlasern aufzuzeigen. Ferner ist es Aufgabe der Erfindung, eine Lichtquelle zu schaffen, in welcher von mindestens einer Primärlichtquelle ausgesandtes Licht effizient frequenzkonvertiert wird.

Die Aufgabe wird gelöst durch den Streifenwellenleiter, das Herstellungsverfahren und die Lichtquelle, wie sie in den unabhängigen Patentansprüchen definiert sind.

Der erfindungsgemässe Streifenwellenleiter ist aus einem Kristall gefertigt. Er weist im Kristall eine Barriereschicht auf, deren Brechungsindex niedriger ist als der Brechungsindex des Kristalls und die den Streifenwellenleiter in Richtung senkrecht zu einer bestimmten Fläche des Kristalls begrenzt. Er wetst zudem eine Rippe auf der genannten Fläche auf, deren Wandungen den Streifenwellenleiter in Richtung parallel zur genannten Fläche begrenzen.

Das erfindungsgemässe Verfahren umgeht weitgehend die oben beschriebenen Schwierigkeiten bei der Herstellung von Streifenwellenleitern in nichtlinearoptischen Kristallen, wie z.B. KNbO₃. Es besteht im wesentlichen aus drei Verfahrensschritten: (a) der Implantation von hochenergetischen leichten Ionen in einen nichtlinear-optischen Kristall, (b) der photolithographischen Herstellung einer Maske auf der Oberfläche dieses Kristalls oder Verwendung einer geeignet vorstrukturierten Maske, z. B. aus Silizium, und (c) dem Ätzen des Kristalls von der Oberfläche her, um eine durch die Verwendung der Maske abgeschirmte Rippe auf dieser Oberfläche zu formen, wodurch die seitliche Führung des Lichts im Wellenleiter gewährleistet wird

Die Methode der Ionenimplantation nutzt den permanenten Strahlschaden, der im Ausgangsmaterial durch den Beschuss mit Ionen erzeugt wird. Bei der Verwendung von leichten Ionen, z.B. H⁺, He⁺ oder He⁺⁺, ist der erzeugte Strahlschaden am Ende des Ionenpfads konzentriert. Der oberflächennahe Bereich wird vergleichsweise geringfügig geschädigt. Das Kristallvolumen in der Tiefe weist aufgrund der Schädigung einen geringeren Brechungsindex auf. Auf diese Weise ist es möglich, Licht zwischen der Oberfläche des Kristalls und dem geschädigten Volumen in der Tiefe zu führen. Ionenimplantation bietet den Vorteil, dank genau kontrollierbaren Prozessparametern (Ionendosis und -energie) massgeschneiderte Wellenleiter für ganz bestimmte Anwendungen herstellen zu können. Die Dicke der wellenleitenden Schicht (Lage der optischen Barriere im Material) kann über die Ionenenergie festgelegt werden, während die Brechungsindexabsenkung in der optischen Barriere durch die Ionendosis bestimmt ist.

Eine wichtige Voraussetzung für die Verwendbarkeit von Wellenleitern für nichtlinear-optische Prozesse besteht darin, dass die nichtlinear-optischen Eigenschaften des Materials bei der Wellenleiterherstellung erhalten bleiben. Gerade Ionendiffusionsoder Ionenaustauschvorgänge können die Nichtlinearität stark vermindern oder ganz zerstören. Auch hier bietet die Ionenimplantation einen Vorteil, denn die Schädigung des Materials in der oberflächennahen Schicht, d.h. im wellenleitenden Bereich, ist verhältnismässig gering und kann nach dem Ionenbeschuss teilweise oder sogar ganz rückgängig gemacht werden.

Die Verwendung eines photolithographischen Verfahrens zur Herstellung einer Maske für die anschliessende Fabrikation eines Streifenwellenleiters bietet den Vorteil, sehr präzise Muster auf der Kristalloberfläche strukturieren zu können. Die Photolackmaske kann sodann durch besondere chemische oder physikalische Prozesse gehärtet werden, um sie gegenüber dem nachfolgenden Ätzprozess widerstandsfähiger zu machen.

Die Verwendung einer vorstrukturierten Maske bietet den Vorteil, dass die Maskenstruktur, insbesondere die Maskendicke, unabhängig von den Eigenschaften des Photolacks für den nachfolgenden Ätzprozess angepasst werden kann. Als Maskenmaterial bietet sich vorzugsweise Silizium an, aber auch Drähte oder Folien aus Metall oder Glas können als Maske verwendet werden.

Das Ätzen des Kristalls von der Oberfläche her und die auf diese Weise erzeugte Rippe auf der Oberfläche des Kristalls führt zur Herstellung eines Streifenwellenleiters, welcher gegenüber den bisherigen Verfahren wichtige Vorteile aufweist. Insbesondere wird bei dieser Methode die seitliche Führung des Lichts nicht durch einen Implantationsprozess erzielt wie bei den erwähnten Verfahren, welche Mehrfachimplantationen oder Einfachimplantation mit schrägen Seitenwänden verwenden. Dadurch können Effekte, welche sich ungünstig auf den Wellenleiter auswirken, wie z.B. Spannungen im Material, vermieden werden. Der Ätzprozess kann zudem den speziellen Eigenschaften des Materials angepasst werden, wobei sowohl Nass- als auch Trockenätzverfahren zur Anwendung kommen können.

Der erfindungsgemässe Streifenwellenleiter ist in optischen Frequenzwandlern, elektro-optischen Modulatoren und Schaltern verwendbar. Insbesondere wird der erfindungsgemässe Streifenwellenleiter in Kombination mit einem Diodenlaser oder einem Festkörperlaser für optische Frequenzvervielfachung, Summen- oder Differenzfrequenzerzeugung und optisch-parameterische Verstärkung oder Oszillation eingesetzt.

Der erfindungsgemässe Wellenleiter eignet sich für Anwendungen in optischen Frequenz-wandlern oder elektro-optischen Modulatoren sowie Schaltern. Beispielsweise kann durch Kombination eines Streifenwellenleiters hergestellt in KNbO₃ und eines AlGaAs oder InGaAs Diodenlasers durch optische Frequenzveropplung Licht im Spektralbereich zwischen 430 und 550 nm erzeugt werden. Als weitere mögliche Pumplichtquellen kommen nebst Halbleiterdiodenlasern auch Festkörperlaser in Frage, vorab Nd und Cr dottierte Granate, wie z. B. YAG (Y₃Al₅O₁₂), GGG (Gd₃Ga₅O₁₂), YSAG (Y₃Sc₂Al₃O₁₂), GSAG (Gd₃Sc₂Al₃O₁₂), GSGG (Gd₃Sc₂Ga₃O₁₂), sowie YVO₄, LiSAF und Ti:Al₂O₃. Als weiteres Beispiel kann durch Kombination eines Diodenlasers, z.B. AlGalnP. und eines Wellenleiters in einem Boratkristall ultraviolette Laserstrahlung im Wellenlängenbereich zwischen 180 und 430 nm durch Frequenzverdopplung erzeugt werden. Als weitere mögliche Pumplichtquelle kommen nebst Diodenlasern auch frequenzverdoppelte Festkörperlaser in Betracht. Boratkristalle eignen sich auch für nichtlinear-optische Prozesse höherer Ordnung, z.B. Dritt- oder Viertharmonische-Erzeugung, welche z.B. mit den genannten Festkörperlasern gepumpt werden können. Daneben kann mit zwei Lichtstrahlen, welche von zwei verschiedenen Laserquellen stammen, in einem Wellenleiter Summenoder Differenzfrequenzerzeugung erreicht werden. Als weitere Anwendung kann der Wellenleiter zur optisch-parametrischen Verstärkung oder optisch-parametrischen Oszillation eingesetzt werden. Diese Prozesse erlauben die wellenlängen-abstimmbare Erzeugung von ultraviolettem, sichtbarem oder infrarotem Licht durch Pumpen mit einem geeigneten Laser. Der Streifenwellenleiter eignet sich sodann für Anwendungen in der Kommunikationstechnologie, etwa in elektro-optischen Modulatoren, Schaltern oder Richt-kopplern. wobei der Wellenleiter mit geeigneten Elektrodenstrukturen kombiniert wird. Diese Bauteile erlauben beispielsweise das optische Kodieren von Information auf einen Lichtstrahl oder das Schalten von Licht zwischen verschiedenen Glasfasern.

Die erfindungsgemässe Lichtquelle enthält mindestens eine Primärlichtquelle und mindestens einen Frequenzwandler, in welchen von der Primärlichtquelle ausgesandtes Licht eingekoppelt wird, wobei mindestens ein Frequenzwandler der erfindungsgemässe Streifenwellenleiter ist. Als Primärlichtquellen eignen sich vorzugsweise Halbleiterdiodenlaser (z.B. AlGaAs oder InGaAs Diodenlaser), Festkörperlaser (z.B. Nd:YAG, Nd:YVO₄, oder Cr:LiSAF), Wellenleiterlaser oder Fiberlaser. Die Lichtquellen, welche auf der optischen Frequenzvervielfachung (z.B. Frequenzverdopplung), optisch-parametrischer Verstärkung oder optisch-parametrischer Oszillation basieren, enthalten vorzugsweise eine Primärlichtquelle und einen Frequenzwandler. Lichtquellen, welche auf optischer Summen- oder Differenzfrequenzerzeugung basieren, enthalten vorzugsweise zwei Primärlichtquellen und einen Frequenzwandler.

Das von der Primärlichtquelle ausgesandte Licht wird vorzugsweise direkt oder durch ein optisches System in den Streifenwellenleiter eingekoppelt. Um die Kopplungsverluste an der ersten und zweiten Stirnfläche des Streifenwellenleiters so klein wie möglich zu halten sind vorzugsweise beide Stirnflächen des Streifenwellenleiters mit einer anti-reflektierenden Beschichtung versehen. Das Restlicht von der Primärlichtquelle wird zusammen mit dem durch die Frequenzkonversion im Streifenwellenleiter generierten Licht, z.B. Licht mit der doppelten Frequenz, über die zweite Stirnfläche des Streifenwellenleiters ausgekoppelt und vorzugsweise durch ein optisches System, z.B. eine oder mehrere Linsen, zu einem Laserstrahl mit kleiner Divergenz gebündelt. Die zweite Stirnfläche des Streifenwellenleiters kann auch mit einer reflektierenden Beschichtung versehen werden. so dass das von der Primärlichtquelle in den Streifenwellenleiter eingekoppelte Licht zusammen mit dem durch die Frequenzkonversion generierten Licht den Streifenwellenleiter in anderer Richtung nochmals durchläuft und dann über die erste Stirnfläche des Streifenwellenleiters ausgekoppelt wird.

In der bevorzugten Ausführungsform wird der Kristall (z.B. KNbO₃) mit hochenergetischen leichten Ionen (z.B. He⁺ Ionen mit 2 MeV Energie) beschossen, um unterhalb der Oberfläche eine vergrabene Schädigungszone mit tieferem Brechungsindex zu bilden. Anschliessend wird auf der Oberfläche mit Hilfe eines photolithographischen Verfahrens eine Maske aus Photolack hergestellt, welche dünne streifenförmige Bereiche abdeckt. Schliesslich wird der Kristall von oben her abgeätzt, wobei der von der Maske abgedeckte Bereich unverändert bleibt. Dadurch wird in diesem Bereich eine Rippe gebildet, die sich von der Oberfläche des Kristalls abhebt. Zum Ätzen wird insbesondere ein physikalisches Ätzverfahren (Sputtern) verwendet, beispielsweise Plasmaätzen mit Ar⁺ Ionen.

In einer zweiten Ausführungsform wird nach dem Verfahrensschritt (a) (Implantation eines planaren Wellenleiters) der Kristall bei einer erhöhten Temperatur für eine bestimmte Zeit ausgeheizt, um Defekte im Kristallgitter auszuheilen, die bei der Implantation entstehen. Dieser Ausheilprozess kann auch nach dem Verfahrensschritt (c) (Ätzen einer Rippe) durchgeführt werden.

In einer dritten Ausführungsform wird, sofern der nichtlinear-optische Kristall ferroelektrisch ist, nach dem Verfahrensschritt (a) (Implantation eines planaren Wellenleiters) ein äusseres elektrisches Feld entlang der Spontanpolarisation des Kristalls gelegt, um bei der Implantation entstandene ferroelektrische Domänen zu reorientieren und den Kristall vollständig entlang einer ausgezeichneten Richtung zu polen.

In einer vierten Ausführungsform wird nach dem Verfahrensschritt (b) (photolithographische Herstellung einer Maske) ein Verfahren angewendet, welches die photolithographische Maske härtet und somit widerstandsfähiger gegenüber dem anschliessenden Ätzprozess macht. Dieses Verfahren kann aus einem zusätzlichen Implantationsschritt mit Ionen niedriger Energie bestehen. Als weitere mögliche Massnahmen zur Härtung der Maske können chemische Vorgänge, Ausheizen oder Bestrahlung mit ultraviolettem Licht angewendet werden.

In einer fünften Ausführungsform wird nach dem Verfahrensschritt (c) (Ätzen einer Rippe) eine Schicht aus einem niedrigbrechenden Material auf die Oberfläche des Kristalls aufgebracht. Insbesondere kann diese Schicht aus oxidischen Verbindungen wie SiO₂, Al₂O₃, Ta₂O₅ oder Nb₂O₅ bestehen. Diese Schicht dient einerseits dazu, den Streifenwellenleiter vor mechanischer Beschädigung zu schützen, andererseits hat sie den Zweck, die optischen Streuverluste am Übergang Wellenleiter - Luft herabzusetzen.

In einer sechsten Ausführungsform wird der Streifenwellenleiter in zwei oder mehrere Bereiche so unterteilt, dass Licht in jedem einzelnen dieser Bereiche separat geführt werden kann. Dies wird erreicht durch die Implantation weiterer Indexbarrieren, wobei diese nach dem Verfahrensschritt (a) (Implantation eines planaren Wellenleiters) oder (c) (Ätzen einer Rippe) erfolgt.

In einer siebten Ausführungsform wird nach dem Verfahrensschritt (a) (Implantation eines planaren Wellenleiters) eine vorstrukturierte Maske anstelle der Maske aus Photolack verwendet. Diese vorstrukturierte Maske besteht vorzugsweise aus Silizium, es können aber auch Drähte, Fibem oder Folien aus Metall oder Glas verwendet werden.

Die Erfindung und zum Vergleich der Stand der Technik werden anhand der Figuren 1 bis 14 detailliert beschrieben. Dabei zeigen
**Fig. 1** die Herstellung eines planaren Wellenleiters in einem Kristall mittels Ionenimplantation gemäss Stand der Technik,
**Fig. 2** eine Maske zum nachfolgenden Ätzen eines Streifenwellenleiters,
**Fig. 3** das Ätzen einer Rippe auf einem Kristall,
**Fig. 4** einen durch Ionenimplantation und Ätzen einer Rippe erzeugten Streifenwellenleiter auf einem Kristall, wobei die Indexbarriere unterhalb der Rippe liegt,
**Fig. 5** einen Streifenwellenleiter, bei dem Indexbarriere innerhalb der Rippe liegt,
**Fig. 6** das Verfahren zum Nachpolen eines ferroelektrischen Kristalls, um ihn eindomänig zu machen,
**Fig. 7** das Verfahren mittels Ionenimplantation zum Härten der Photolackmaske für den nachfolgenden Ätzprozess,
**Fig. 8** einen Streifenwellenleiter mit einer oben aufgebrachten Deckschicht,
**Fig. 9** einen Kristall mit mehreren Streifenwellenleitern,
**Fig. 10** einen Streifenwellenleiter, der in mehrere separat lichtführende Bereiche unterteilt ist.
**Fig. 11** eine Lichtquelle, welche einen Halbleiterdiodenlaser zusammen mit dem erfindungsgemässen Streifenweltenleiter als effizienten Frequenzwandler verwendet.
**Fig. 12** eine kompakte Lichtquelle, welche einen Halbleiterdiodenlaser zusammen mit dem erfindungsgemässen Streifenwellenleiter als effizienten Frequenzwandler verwendet.
**Fig. 13** eine Lichtquelle, welche den erfindungsgemässen Streifenwellenleiter zusammen mit einem Festkörperlaser für effiziente Frequenzkonversion verwendet.
**Fig. 14** eine Lichtquelle, welche den erfindungsgemässen Streifenwellenleiter zusammen mit einem Wellenleiterlaser für effiziente Frequenzkonversion verwendet.

Aus Gründen der Übersichtlichkeit stimmen die Proportionen in den Figuren nicht mit denjenigen in der Wirklichkeit überein.

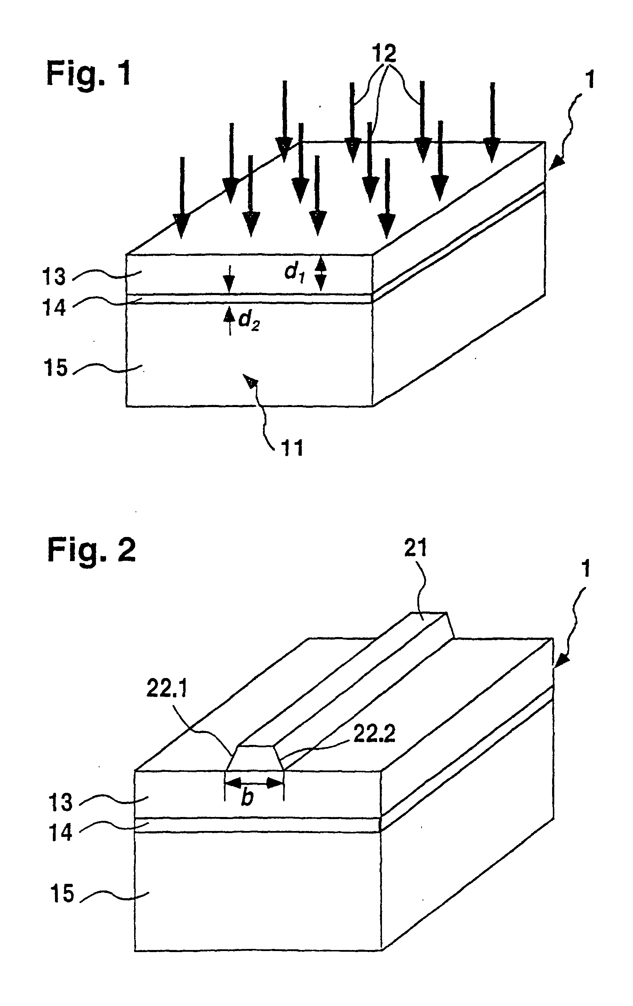

Der Stand der Technik zur Herstellung eines planaren Wellenleiters mittels Ionenimplantation ist in **Fig. 1** dargestellt. Ein nichtlinear-optischer Kristall 11 (z.B. KNbO₃) wird einem Ionenstrahl 12 aus hochenergetischen leichten Ionen ausgesetzt. Als solche Ionen gelten z.B. Protonen (H⁺) oder Heliumionen (He⁺ oder He⁺⁺) mit Energien im Bereich von einigen Zehnteln bis einigen Megaelektronenvolt (MeV), z.B. 0.3 bis 3 MeV. Die Ionen dringen in den Kristall ein und verlieren durch Wechselwirkungen mit den Elektronen und Atomen des Kristalls ihre Energie. In einer oberflächennahen Zone 13 wird der Kristall vergleichsweise wenig geschädigt. Am Ende des Ende des Ionenpfads bildet sich ein Bereich 14, in dem die Kristallinität des Materials geschädigt oder zerstört ist. Aufgrund dieser Schädigung weist der Bereich 14 einen niedrigeren Brechungsindex als der ungeschädigte Kristall 11 auf. Somit wird in der Schädigungszone eine Brechungsindex-Barriere 14 gegenüber der darüberliegenden oberflächennahen Zone 13 und dem darunterliegenden ungeschädigten Kristallvolumen 15 gebildet. Die Brechungsindex-Barriere 14 erlaubt es, Licht in der darüberliegenden oberflächennahen Zone 13 zu führen. Die typische Dicke *d*₁ dieser Zone 13 beträgt einige Mikrometer (µm), z.B. 4.4 µm für 2 MeV He⁺ Ionen in KNbO₃, während die Dicke *d*₂ der Schädigungszone 14 (Brechungsindex-Barriere) einige Zehntel µm beträgt. Die gesamte Struktur bestehend aus oberflächennaher Zone 13, Brechungsindex-Barriere 14 und dem als Substrat dienenden ungeschädigten Kristallvolumen 15 bildet einen planaren Wellenleiter 1. Um die Dicke *d*₂ der Barriereschicht 14 zu vergrössern, können auch mehrere Implantationsschritte mit Ionen leicht unterschiedlicher Energie ausgeführt werden. Beispielsweise führen in KNbO₃ zwei nacheinanderfolgende Implantationsschritte mit Ionen einer Energie von 2 und 1.85 MeV zur Bildung einer 0.8 µm breiten Schädigungszone. Durch das Herstellen einer breiten Brechungsindex-Barriere 14 können die optischen Verluste des Wellenleiters bewirkt durch Abstrahlen von Licht aus dem Wellenleiter in das Substrat vermindert werden. Der Kristall 11, der für die Wellenleiterherstellung verwendet wird, besitzt vorzugsweise auf optische Qualität polierte Flächen. Daneben kann das Verfahren aber auch auf Kristalle mit natürlich gewachsenen Flächen angewendet werden. Die Richtungen der Kristallkanten bezüglich der kristallographischen Achsen können beliebig sein.

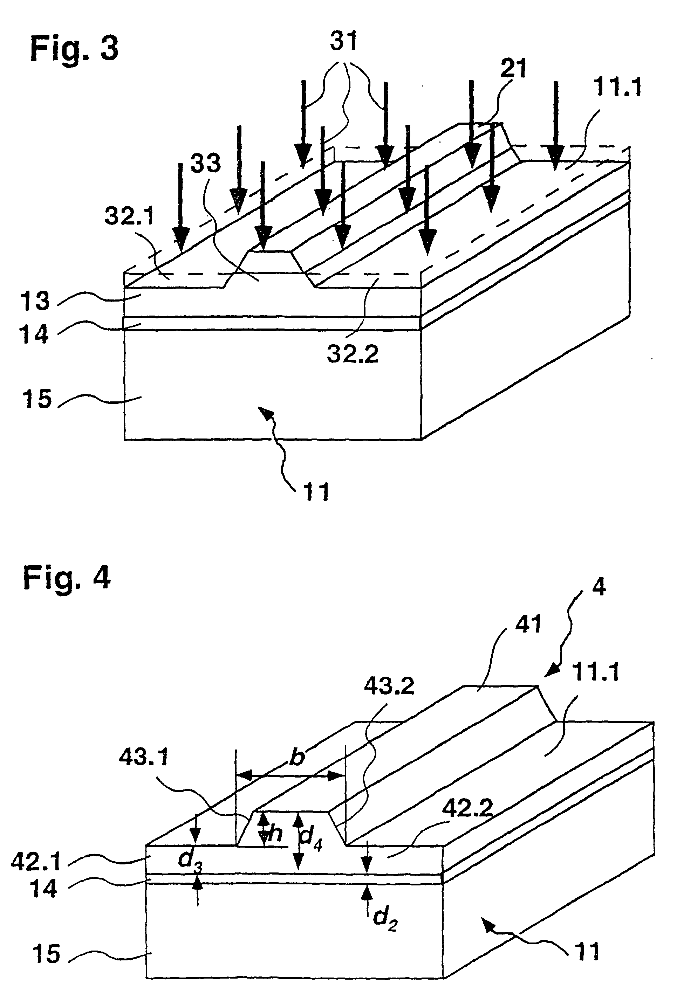

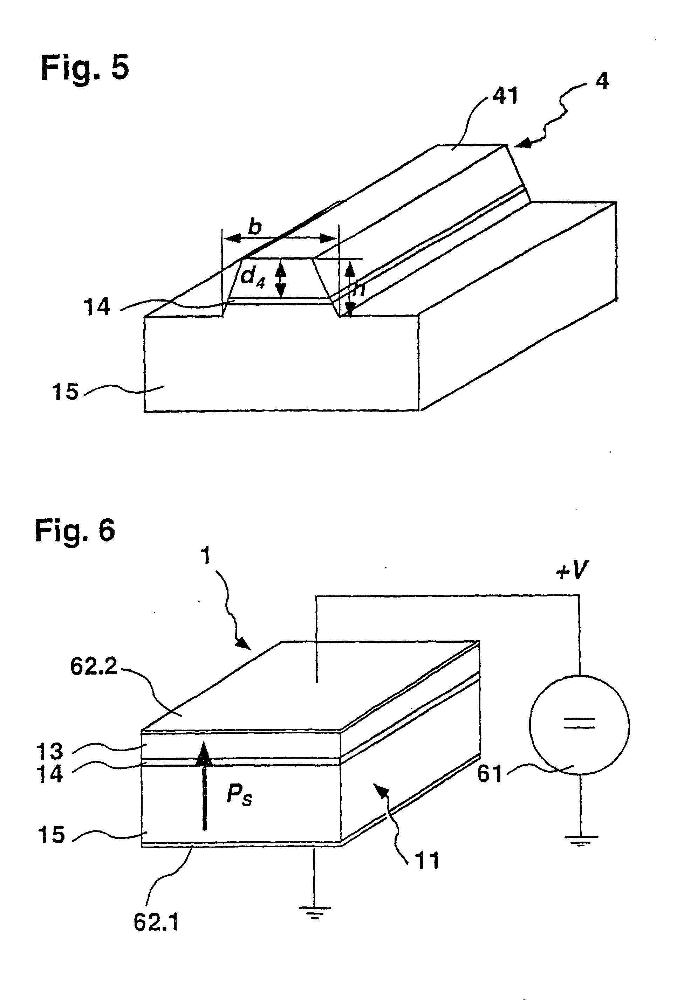

Das erfindungsgemässe Verfahren wird in den **Figuren 2** bis **10** beschrieben. Nach der Herstellung eines planaren Wellenleiters 1 in einem nichtlinear-optischen Kristall 11 durch Ionenimplantation (Fig. 1) wird auf die Oberfläche dieses planaren Wellenleiters eine streifenförmige Maske 21 aus Photolack oder einem anderen geeigneten Material aufgebracht, wie in **Fig. 2** dargestellt. Die Breite *b* des Streifens beträgt einige Mikrometer (z.B. 5 µm). Die Steilheit der Flanken 22.1 und 22.2 der streifenförmigen Maske 21 kann dabei über die Belichtungs- und Entwicklungszeit des Photolacks beim Photolithographieprozess verändert werden, wobei vorzugsweise eine möglichst grosse Steilheit angestrebt wird, d. h. eine Rippe mit senkrechten Flanken. Es kann auch eine vorstrukturiene Maske verwendet werden. Dies bietet den Vorteil, dass die Maskenstruktur, insbesondere die Maskendicke und die Flankenform, unabhängig von den Prozesseigenschaften des Photolacks angepasst werden kann. Als Maskenmaterial bietet sich vorzugsweise Silizium an, aber auch Drähte oder Folien aus Metall oder Glas können als Maske verwendet werden. **Fig. 3** stellt den nächsten Verfahrensschritt dar. Mittels eines Trockenätzverfahrens wird die oberflächennahe Zone 13 mit Ionen 31 in zwei nicht abgedeckten Bereichen 32.1 und 32.2 heruntergeätzt. Für KNbO₃ beispielsweise werden dazu vorzugsweise Ar⁺ Ionen aus einem Plasma verwendet, wodurch das Material mechanisch abgesputtert wird. Die Energie dieser Ionen liegt vorzugsweise im Bereich von 0.1 bis 20 Kiloelektronenvolt (keV). Als weitere Möglichkeit kommen Ionen von Fluor-Chlor-Kohle-Wasserstoffverbindungen (z.B. CH₃F, CCl₂F₂, CF₄) für die Verwendung als chemische Trockenätzmittel in Frage. Ebenso kann der Ätzvorgang in einem Nassätzprozess durchgeführt werden, z.B. mittels Ätzen mit Flusssäure (HF). Durch das Ätzen werden die unabgedeckten Bereiche 32.1 und 32.2 gegenüber einem abgedeckten Bereich 33 abgesenkt, und eine Rippe auf einer bestimmten Fläche 11.1 des Kristalls 11 gebildet. Eine solche Rippe 41 ist in **Fig. 4** abgebildet. Die gesamte Struktur bestehend aus der Rippe 41, zwei an die Rippe seitlich angrenzenden Bereichen 42.1 und 42.2, der Brechungsindexbarriere 14 sowie dem als Substrat dienenden Kristallvolumen 15 bildet den Streifenwellenleiter 4. Dabei bezeichnet *d*₃ den Abstand zwischen der Kristalloberfläche 11.1 und der Indexbarriere in den Seitenbereichen 42.1 und 42.2 und *d*₄ den Abstand zwischen Kristalloberfläche und Indexbarriere 14 in der Rippe 41. Der Streifenwellenleiter 4 führt Licht in zwei Richtungen, wobei die Führung in Richtung senkrecht zur Kristalloberfläche 11.1 durch die Brechungsindexbarriere 14 und die Führung in Richtung parallel zur Kristalloberfläche 11.1 durch die seitlichen Begrenzungen 43.1 und 43.2 der Rippe 41 vermittelt wird. Die Höhe *h* der Rippe 41, definiert als der Abstand zwischen der Oberfläche der Rippe 41 und der Oberfläche 11.1 des Kristalls über den Seitenbereichen der Rippe 42.1 und 42.2, ist bestimmt durch die Ätzdauer. Um seitliche Führung im Streifenwellenleiter 4 zu gewährleisten, genügt dabei bereits eine kleine Höhe *h* (Ätztiefe) im Vergleich zum Abstand *d*₄ der Rippenoberfläche zur Indexbarriere 14. Beispielsweise genügt für eine Dicke *d*₄ von 5 µm eine Rippenhöhe *h* von ungefähr 0.5 µm, um seitliche Führung des Lichts im Streifenwellenleiter 4 zu erreichen. Anzustreben ist eine Ätztiefe *h* zwischen 25 und 75% der Dicke *d*₄, um optimale seitliche Führung zu erzielen. Die Ätzdauer kann jedoch auch so gewählt werden, dass die Höhe *h* der Rippe 41 gleich oder grösser ist als der Abstand *d*₄ der Rippenoberfläche von der Brechungsindexbarriere 14. **Fig. 5** zeigt einen Streifenwellenleiter 4, bei dem *h* grösser als *d*₄ ist.

Der Beschuss eines Kristalls 11 mit leichten Ionen 12 (Fig. 1) kann zur Bildung von Defekten im Kristallgitter in der durchstrahlten oberflächennahen Zone 13 führen. Bei solchen Defekten handelt es sich z.B. um Verschiebung einzelner Ionen von ihren Gitterplätzen oder der Bildung von Sauerstoffleerstellen im Gitter. Diese Defekte können Licht absorbieren oder streuen und somit unetwünschte optische Verluste des im Wellenleiter geführten Lichts verursachen. In vielen nichtlinear-optischen Kristallen können solche Fehlstellen durch eine Wärmebehandlung (Tempern) des Kristall nach der Ionenimplantation ausgeheilt werden. In KNbO₃ führt beispielsweise eine solche Temperbehandlung bei 180 °C während zehn Stunden zu einer Reduktion der optischen Verluste des Wellenleiters um bis zu 10 dBcm⁻¹. Ein solcher Temperschritt kann auch erst nach der Bildung eines Streifenwellenleiters 4 (Fig. 4) durchgeführt werden. Der Temperschritt kann in einer Normalatmosphäre durchgeführt werden. Für das Ausheilen von Sauerstoffehlstellen kann es aber auch vorteilhaft sein, die Temperbehandlung in einer Atmosphäre mit Sauerstoffüberschuss durchzuführen.

Im besonderen Fall von ferroelektrischen Kristallen fallen die Schwerpunkte der positiv und negativ geladenen Ionen nicht zusammen, wodurch das Material eine Spontanpolarisation *P*_{*S*} erhält, die eine Vorzugsrichtung im Kristall auszeichnet. In einem idealen ferroelektrsichen Kristall weist die Spontanpolarisation im gesamten Kristall dieselbe Richtung auf. Ein solcher Kristall wird als eindomänig bezeichnet. Treten im ferroelektrischen Kristall mehrere Beriche auf, in denen die Spontanpolarisation verschiedene Richtungen aufweist, so wird der Kristall vieldomänig oder depolarisiert. Der Beschuss eines ferroelektrischen Kristalls 11 mit leichten Ionen 12 führt zur Bildung von ferroelektrischen Domänen im durchstrahlten Bereich 13, d.h. zu Bereichen, die eine unterschiedliche Richtung der Polarisation besitzen. Eine solche Depolarisation kann zum teilweisen Verlust der optischen Nichtlinearität in der oberflächennahen Zone 13 führen. **Fig. 6** zeigt eine mögliche Anordnung, mit der durch Anlegen eines genügend hohen äusseren elektrischen Feldes an den Kristall (z.B. 3 kVcm⁻¹ bei KNbO₃) die Polarisation in diesen Domänen wieder parallel ausgerichtet werden kann. Ein solcher Nachpolprozess wird vorzugsweise nach der Implantation des planaren Wellenleiters 1 durchgeführt. Eingezeichnet ist die Vorzugsrichtung der Spontanpolarisation *P*_{*S*} des für die Wellenleiterherstellung verwendeten ursprünglichen Kristalls 11. Mit Hilfe einer Hochspannungsquelle 61, die nur schematisch dargestellt ist, und je einer auf der Ober- und Unterseite des Kristalls 11 aufgebrachten Elektrode 62.1 und 62.2 wird eine Gleichspannung *V* an den Kristall 11 angelegt und ein elektrisches Feld mit Richtung parallel zu *P*_{*S*} erzeugt. Unter dem Einfluss dieses Feldes wird die Spontanpolarisation in Domänen in der oberflächennahen Zone 13, welche aufgrund der Implantation 12 entstanden sind und deren Polarisationsvektor nicht mehr parallel zu *P*_{*S*} verläuft, wieder entlang der Richtung von *P*_{*S*} ausgerichtet. Da die Richtung von *P*_{*S*} nicht notwendigerweise senkrecht zur Kristalloberfläche verlaufen muss, sind auch andere Anordnungen als die in Fig. 6 gezeigte möglich. Beispielsweise kann *P*_{*S*} auch parallel zur Kristalloberfläche verlaufen, so dass die Elektroden 62.1 und 62.2 entsprechend an den Seitenflächen des Kristalls 11 angebracht werden. Die Elektroden 62.1 und 62.2 können aus metallischen Platten bestehen, die in Kontakt mit dem Kristall 11 gebracht werden. Ebenso können die Elektroden mittels Aufbringen einer metallischen Schicht (z.B. durch Aufdampfen oder Aufpinseln) hergestellt werden. Im weiteren können auch elektrolytische Flüssigelektroden zur Anwendung gelangen. Möglich ist auch eine Kombination von verschiedenen Elektrodentypen, beispielsweise eine Metallplatte unten und eine aufgedampfte Metallschicht oben. Die Spannung *V* kann sowohl statisch als auch gepulst angelegt werden.

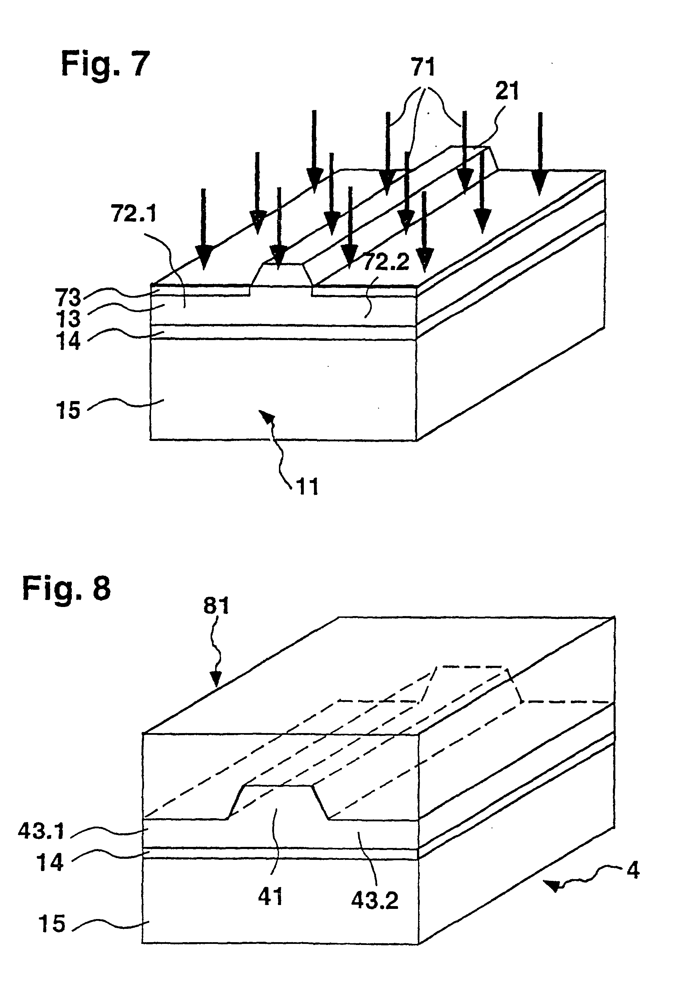

Ein weiterer Herstellungsschritt kann nach der Bildung der streifenförmigen Photo-lackmaske 21 (Fig. 2) eingeschaltet werden. Durch weiteren Beschuss mit leichten Ionen niedriger Energie 71 (zwischen 0.1 und 0.5 MeV für Helium, zwischen 0.05 und 0.2 MeV für Protonen) kann erreicht werden, dass die Ionen bereits in der Maske 21 vollständig abgebremst werden, wie in **Fig. 7** gezeigt. Dies bewirkt eine strukturelle Veränderung des Photolacks, die eine Härtung gegenüber mechanischer oder chemischer Bearbeitung zur Folge hat. In zwei nicht abgedeckten Bereichen 72.1 und 72.2 dringen die Ionen wegen ihrer geringen Energie nur in eine Schicht 73 unmittelbar unter der Oberfläche des Kristalls 11 ein. Eine Härtung des Photolacks hat zur Folge, dass sich das Ätzratenverhältnis des Photolacks zum Kristall verbessern lässt. Dies ist von grosser Wichtigkeit, da die Ätzraten des Kristalls 11 sehr klein sein können und deshalb verhindert werden muss, dass die Photolackmaske 21 während des Ätzvorgangs im Verhältnis zum Kristall zu schnell abgetragen wird. Im Betracht zu ziehen sind auch andere Härtungsmassnahmen wie Ausbacken des Photolacks bei erhöhter Temperatur, Bestrahlen mit UV Licht oder chemische Prozesse wie etwa die Behandlung des Photolacks mit Chlorbenzol.

**Fig. 8** zeigt, wie auf den Streifenwellenleiter 4 und die seitlich angrenzenden Bereiche 43.1 und 43.2 nach dem Ätzprozess eine Deckschicht 81 aufgebracht wird. Diese besteht aus einem dielektrischen Material, welches einen niedrigeren Brechungsindex aufweist als die Bereiche 41, 43.1 und 43.2. Hierbei kommen insbesondere Oxide wie SiO₂, Al₂O₃, Ta₂O₅ oder Nb₂O₅ in Betracht. Die Deckschicht 81 kann in einem herkömmlichen Verfahren wie beispielsweise Aufdampfen oder Sputtern im Vakuum aufgebracht werden. Ihre Aufgabe besteht einerseits im Schutz der Rippe 41 vor mechanischer Beschädigung. Andererseits werden durch die Verkleinerung des Brechungsindexsprungs an den Grenzflächen zwischen Streifenwellenleiter 4 und Umgebung die optischen Streuverluste des Wellenleiters verkleinert.

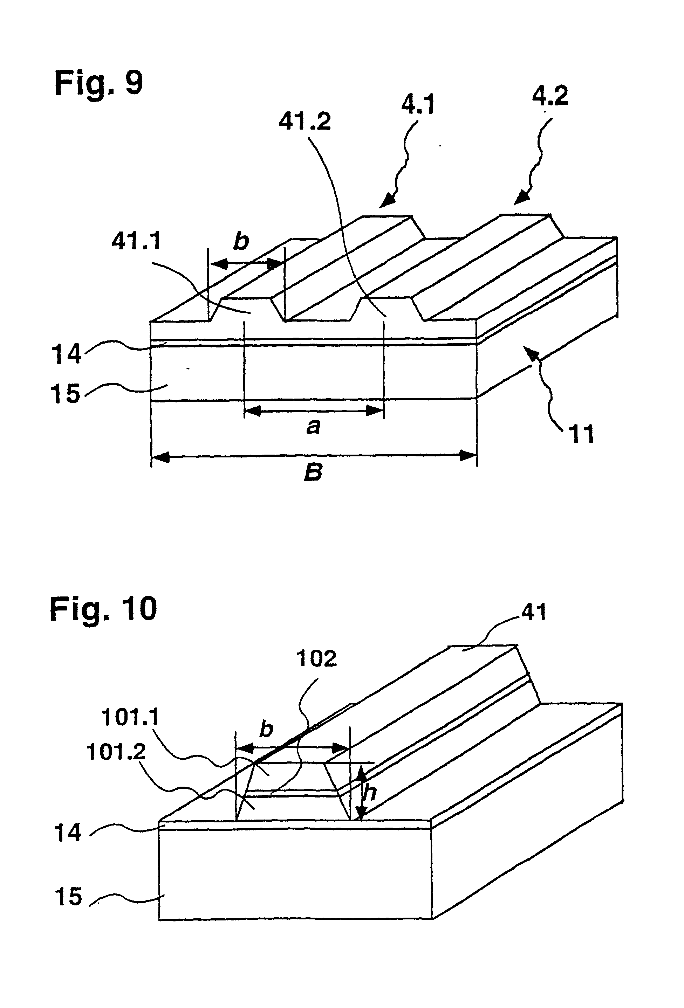

**Fig. 9** zeigt, wie in einem Kristall 11 mehrere, z.B. zwei, Streifenwellenleiter 4.1 und 4.2 mittels Ätzen mehrerer Rippen 41.1 und 41.2 hergestellt werden können. Solche Anordnungen können beispielweise in Richtkopplern, optischen Schaltern oder integriert-optischen Interferometern zur Anwendung kommen. Der Abstand *a* der Streifenwellenleiter beträgt dabei mindestens die halbe Rippenbreite *b* und höchstens die gesamte Kristallbreite *B*. Die Verfahrensschritte (a) (Implantation), (b) (photolithographische Maskenherstellung) und (c) (Ätzen) erfolgen dabei für alle Wellenleiter vorzugsweise gleichzeitig, wobei beim Verfahrens-schritt (b) eine Maske mit einem geeigneten Streifenmuster verwendet wird. Die Anzahl der Wellenleiter auf einem Kristall kann auch wesentlich grösser sein als im aufgeführten Beispiel, z.B. auch 100.

Für Anwendungen in optischen Schaltern kann es notwendig sein, Strukturen mit mehreren übereinanderliegenden Wellenleitern herzustellen, um Licht von einem Kanal in einen anderen zu schalten. **Fig. 10** zeigt eine solche Anordnung von zwei übereinander-liegenden separat lichtleitenden Bereichen 101.1 und 101.2 innerhalb einer Rippe 41. Die zwei Bereiche 101.1 und 101.2 sind durch eine Indexbarriere 102 getrennt, die ebenfalls durch Ionenimplantation hergestellt wurde. Dieser zusätzliche Implantationsschritt kann nach der Herstellung des ursprünglichen planaren Wellenleiters 1 (Fig. 1) erfolgen. Für den zweiten Implantationsschritt werden dabei Ionen mit niedrigerer Energie verwendet, z.B. mit der halben Energie, die zur Herstellung des planaren Wellenleiters 1 verwendet wurde. Anschliessend wir der Ätzprozess wie oben beschrieben durchgeführt. Ebenso kann die zweite Implantation aber auch erst nach dem Ätzen einer Rippe 41 (Fig. 4) erfolgen. Im weiteren ist es möglich, mit mehr als zwei nachfolgenden Implantationsschritten mehrere, z.B. acht, separat lichtführende Bereiche 101 herzustellen.

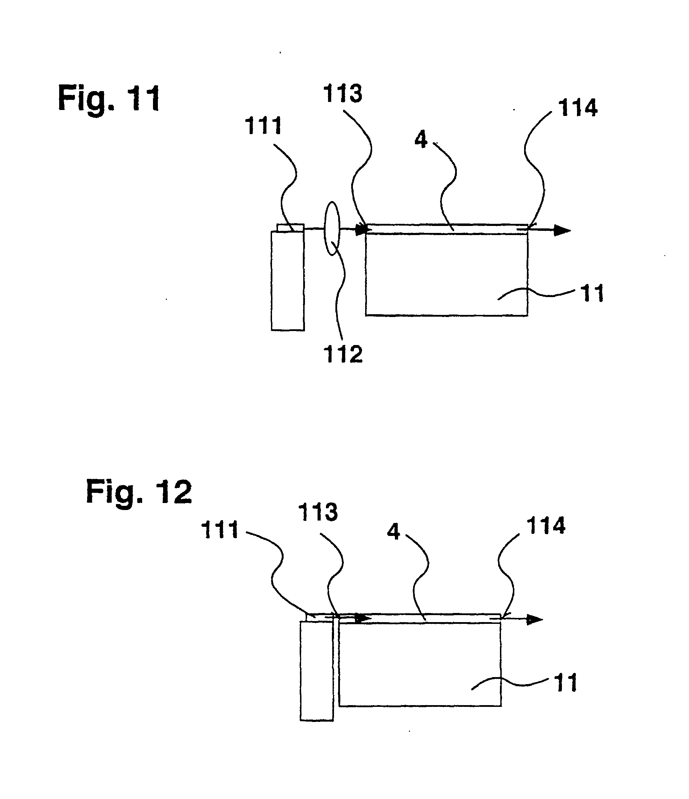

Der erfindungsgemässe Streifenwellenleiter wird vorzugsweise in Kombination mit einem Halbleiterdiodenlaser oder einem Festkörperlaser für optische Frequenzvervielfachung, Summen- oder Differenzfrequenzerzeugung und optisch-parameterische Verstärkung oder Oszillation eingesetzt. Bevorzugte Ausführungsformen von Lichtquellen, welche den erfindungsgemässen Wellenleiter enthalten, werden in den **Figuren 11** bis **14** beschrieben.

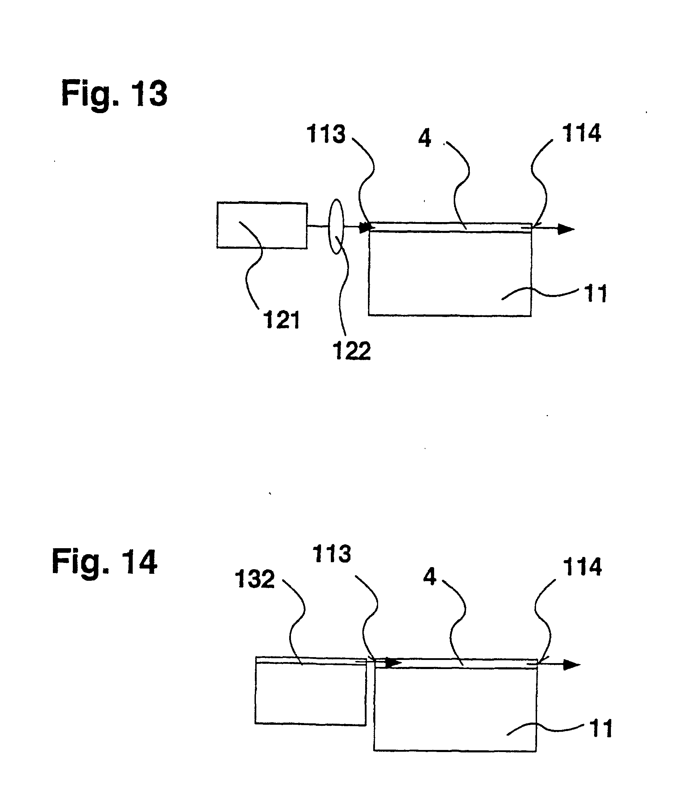

**Fig. 11** und **12** zeigen, wie die Kombination eines Diodenlasers 111 mit einem Streifenwellenleiter 4 einen kompakten frequenzkonvertierten Laser ergibt Hierzu wird der erfindungsgemässe Streifenwellenleiter 4 so mit einem Halbleiterdiodenlaser 111 zusammengefügt, dass das Licht vom Diodenlaser mittels eines optischen Systems, beispielsweise einer oder mehrerer Linsen 112 (Fig. 11) oder auch direkt (Fig. 12) in den Wellenleiter 4 eingekoppelt und frequenzkonvertiert wird. Es können auch mehrere Primärlichtquellen (vorzugsweise zwei) verwendet werden. Die erste und/oder zweite Stirnfläche 113, 114 des Streifenwellenleiters 4 können mit reflektierenden oder anti-reflektierenden Beschichtungen versehen werden. Eine reflektierende Beschichtung auf der zweiten Stirnfläche 114 ermöglicht es, dass der Streifenwellenleiter 4 in einem zweiten Durchgang nochmals für Frequenzkonversion verwendet werden kann (auch für Ausführungsformen von Fig. 13-14 möglich).

**Fig. 13** zeigt, wie die Kombination eines Festkörperlasers 121 mit einem Streifenwellenleiter 4 einen kompakten frequerzkonvertierten Laser ergibt. Hierzu wird der Streifenwellenleiter 4 so mit einem Festkörperlaser 121 zusammengefügt, dass das Licht vom Festkörperlaser 121 mittels eines optischen Systems, bspw. einer oder mehrerer geeigneter Linsen 122, in den Wellenleiter 4 eingekoppelt und frequenzkonvertiert wird.

**Fig. 14** zeigt, wie die Kombination eines Wellenleiterlasers 132 mit einem Streifenwellenleiter 4 einen kompakten frequenzkonvertierten Laser ergibt. Hierzu wird der Streifenwellenleiter 4 so mit einem Wellenleiterlaser 132 zusammengefügt, dass das Licht vom Wellenleiterlaser 132 direkt in den Wellenleiter 4 eingekoppelt und frequenzkonvertiert wind. Als Wellenleiterlaser bietet sich auch ein Faserlaser an.

## Patentansprüche

1. Aus einem nichtlinear-optischen Kristall (11) gefertigter Wellenleiter (4), mit einer Barriereschicht (14) im Kristall (11), deren Brechungsindex niedriger ist als der Brechungsindex des Kristalls (11) und die den Wellenleiter (4) in Richtung senkrecht zu einer bestimmten Fläche (11.1) des Kristalls (11) begrenzt, wobei das Kristallmaterial in der Barriereschicht (14) chemisch unverändert, aber physikalisch verändert ist, indem die Barriereschicht (14) Ionen enthält und durch die Präsenz der Ionen hervorgerufene gezielte Strahlschäden aufweist, wodurch ihr Brechungsindex niedriger ist als derjenige des Kristalls (11), **dadurch gekennzeichnet, dass** der Wellenleiter (4) als Streifenwellenleiter mit einer Rippe (41) auf der genannten Fläche (11.1) ausgebildet ist, wobei die Wandungen der Rippe (41) den Streifenwellenleiter (4) in Richtung parallel zur genannten Fläche (11.1) begrenzen und die Höhe (h) der Rippe (41) über der genannten Fläche (11.1) miadestens 0.5 µm beträgt.

2. Wellenleiter nach Anspruch 1, **dadurch gekennzeichnet, dass** der Kristall (11) ein ferroelektrisches Oxid oder ein Borat ist.

3. Wellenleiter nach Anspruch 1 oder 2, **gekennzeichnet durch** mindestens eine dielektrische Deckschicht (81), deren Brechzahl niedriger ist als die Brechzahl des Kristalls (11), auf der Kristalloberfläche (11.1).

4. Wellenleiter nach einem der Ansprüche 1-3, **dadurch gekennzeichnet, dass** die Rippe (41) in Richtung senkrecht zur Kristalloberfläche (11.1) in zwei oder mehrere Bereiche (101.1, 101.2) unterteilt ist, die durch eine oder mehrere Barriereschichten (102) getrennt sind.

5. Verfahren zur Herstellung eines Wellenleiters (4) aus einem nichtlinear-optischen Kristall (11), umfassend einen ersten Verfahrensschritt:
(a) Herstellung einer Barriereschicht (14) im Kristall (11), welche im wesentlichen parallel zu einer bestimmten Fläche (11.1) des Kristalls (11) liegt, indem Ionen mit einer definierten Energieverteilung und einer definierten Dosis durch die bestimmte Fläche (11.1) in den Kristall (11) implantiert werden, wobei der Kristall (11), die zu implantierenden Ionen, die Implantationsenergieverteilung und die Implantationsdosis derart gewählt werden, dass die implantierten Ionen keine chemische Verbindung mit dem Kristallmaterial eingehen, den Kristall aber in einer Schädigungszone (14) physikalisch verändern, indem sich die Ionen in der Schädigungszone (14) festsetzen und dort gezielt permanente Strahlschäden hervorrufen, wodurch der Brechungsindex der Schädigungszone (14) gegenüber dem Kristall (11) permanent erniedrigt wird;
**gekennzeichnet durch** die folgenden weiteren Verfahrensschritte:
(b) Aufbringen einer Maske (41) auf der genannten Fläche (11.1) des Kristalls (11);
(c) Ätzen des Kristalls (11) von der genannten Fläche (11.1) her, um eine Rippe (41) auf der genannten Fläche (11.1) zu formen, so welt, bis die Höhe (h) der Rippe (41) über der genannten Fläche (11.1) mindestens 0.5 µm beträgt.

6. Verfahren nach Anspruch 5, **dadurch gekennzeichntet,** dass im Verfahrensschritt (a) die Barrierreschicht (14) durch Implantation von hochenergetischen leichten Ionen (12) in den Kristall (11) hergestellt wind.

7. Verfahren nach Anspruch 6, **dadurch gekennzeichnet, dass** im Verfahrensschritt (a) He⁺-Ionen, He⁺⁺-Ionen oder H⁺-Ionen (12) mit einer Energie von 0.3 MeV bis 3 MeV verwendet werden.

8. Verfahren nach einem der Ansprüche 5-7, **dadurch gekennzeichnet, dass** nach Verfahrensschritt (a) oder (c) der Kristall (11) bei einer erhöhten Temperatur ausgeheizt wird, um Defekte in einer Zone (13) zwischen der genannten Fläche (11.1) und der Barriereschicht (14) auszuheilen.

9. Verfahren nach einem der Ansprüche 5-8, **dadurch gekennzeichnet, dass** nach Verfahrensschritt (a) oder (c) am Kristall (11) ein äusseres elektrisches Feld angelegt wird, um ferroelektrische Domänen zu reorientieren und den Kristall (11) entlang einer ausgezeichneten Richtung zu polen.

10. Verfahren nach einem der Ansprüche 5-9, **dadurch gekennzeichnet, dass** nach Verfahrensschritt (b) die Maske (21) auf der genannten Fläche (11.1) photolithographisch hergestellt wird.

11. Verfahren nach Anspruch 10, **dadurch gekennzeichnet, dass** nach Verfahrensschritt (b) die Maske (21) durch Ionenimplantation, chemisch, durch Ausheizen oder Bestrahlung mit ultravioletter Strahlung gehärtet wind.

12. Verfahren nach einem der Ansprüche 5-9, **dadurch gekennzeichnet, dass** in Verfahrensschritt (b) die Maske (21) separat vorstrukturiert und auf die genannte Fläche (11.1) aufgelegt wird.

13. Verfahren nach einem der Ansprüche 5-12, **dadurch gekennzeichnet, dass** in einem Kristall (11) mehrere Streifenwellenleiter (4) gleichzeitig hergestellt werden.

14. Verwendung des Wellenleiters nach einem der Ansprüche 1-4 in optischen Frequenzwandlern zur Frequenzvervielfachung, Summenfrequenzerzeugung, Differenzfrequenzerzeugung oder optisch-parameterischen Oszillation oder in elektro-optischen Modulatoren, Schaltern oder Richtkopplern.

15. Lichtquelie mit mindestens einer Primärlichtquelle (111, 121, 132) und mindestens einem Frequenzwandler, in welchen von der mindestens einen Primärlichtquelle (111, 121, 132) ausgesandtes Licht einkoppelbar ist, **dadurch gekennzeichnet, dass** der mindestens eine Frequenzwandler ein Wellenleiter (4) nach einem der Ansprüche 1-4 ist.

16. Lichtquelle nach Anspruch 15, **dadurch gekennzeichnet, dass** die mindestens eine Primärlichtquelle (111, 121, 132) ein Halbleiterdiodenlaser (111), ein Festkörperlaser (121), ein Wellenleiterlaser (132) oder ein Fiberlaser ist.

17. Lichtquelle nach Anspruch 15 oder 16, **dadurch gekennzeichnet, dass** das von der mindestens einen Primärlichtquelle (111,121,132) ausgesandte Licht direkt oder durch ein optisches System (112) in den mindestens einen Wellenleiter (4) einkoppelbar ist.

18. Lichtquelle nach einem der Ansprüche 15-17, **dadurch gekennzeichnet, dass** der mindestens eine Wellenleiter (4) eine erste und zweite Stirnfläche (113, 114) aufweist und mindestens eine dieser Stirnflächen (113, 114) mit einer reflektierenden oder anti-reflektierenden Beschichtung versehen ist.

## Claims

1. Waveguide (4), manufactured from a non-linear optical crystal (11), with a barrier layer (14) in the crystal (11), the refraction index of which is lower than the refraction index of the crystal (11) and which limits the waveguide (4) in the direction vertical to a certain surface (11.1) of the crystal (11), whereby the material of the crystal is chemically unchanged in the barrier layer (14), but physically changed, inasmuch as the barrier layer (14) contains ions and manifests deliberate radiation damage caused by the presence of the ions, as a result of which its refraction index is lower than that of the crystal (11), **characterized in that** the waveguide (4) is designed as a rib waveguide with a rib (41) on the surface (11.1) mentioned, whereby the walls of the rib (41) limit the rib waveguide in the direction parallel to the surface mentioned (11.1) and the height (h) of the rib (41) above the surface mentioned (11.1) amounts to at least 0.5 µm.

2. Waveguide in accordance with claim 1, **characterized in that** the crystal (11) is a ferro-electric oxide or a borate.

3. Waveguide in accordance with claim 1 or 2, **characterized by** at least one dielectric covering layer (81), the refraction index of which is lower than the refraction index of the crystal (11), on the surface of the crystal (11.1).

4. Waveguide in accordance with one of the claims 1 - 3, **characterized in that** the rib (41) in the direction vertical to the crystal surface (11.1) is split-up into two or more zones (101.1, 101.2), which are separated by one or more barrier layers (102).

5. Process for the manufacture of a waveguide (4) from a non-linear optical crystal (11), comprising a first process step:
(a) Production of a barrier layer (14) in the crystal (11), which in essence is parallel to a certain surface (11.1) of the crystal (11), in that ions with a defined energy distribution and a defined dosage are implanted into the crystal (11) through the certain surface (11.1), that the ions to be implanted, the distribution of the implantation and the implantation dosage are selected in such a manner, that the implanted ions do not form a chemical compound with the material of the crystal, do, however, physically change the crystal within a damage zone (14), inasmuch as the ions implant themselves in the damage zone (14) and there deliberately cause permanent radiation damage, as a result of which the refraction index of the damage zone (14) is permanently lowered relative to the crystal;
**characterized by** the following further process steps:
(b) The application of a mask (41) on the surface mentioned (11.1) of the crystal (11);
(c) Etching of the crystal (11) from the surface mentioned (11.1), in order to form a rib (41) on the surface mentioned (11.1), to such an extent, until the height (h) of the rib (41) above the surface mentioned (11.1) amounts to at least 0.5 µm.

6. Process in accordance with claim 5, **characterized in that** in the process step (a) the barrier layer (14) is produced by the implantation of high-energy light ions (12) into the crystal (11).

7. Process in accordance with claim 6, **characterized in that** in the process step (a) He+ ions, He++ ions or H+ ions (12) with an energy of 0.3 MeV to 3 MeV are utilized.

8. Process in accordance with one of the claims 5 - 7, **characterized in that** following the process step (a) or (c), the crystal (11) is baked at an increased temperature, in order to cure defects in a zone (13) between the surface mentioned (11.1) and the barrier layer (14).

9. Process in accordance with one of the claims 5 - 8, **characterized in that** following the process step (a) or (c) an external electric field is applied to the crystal (11), in order to re-orientate ferro-electric domains and to pole the crystal (1) along a designated direction.

10. Process in accordance with one of the claims 5 - 9, **characterized in that** in process step (b) the mask (21) on the surface mentioned (11.1) is produced by a photo-lithographic process.

11. Process in accordance with claim 10, **characterized in that** in process step (b) the mask (21) is hardened by means of ion implantation, chemically, by baking or by irradiation with ultraviolet radiation.

12. Process in accordance with one of the claims 5 - 9, **characterized in that** in process step (b) the mask (21) is separately pre-structured and placed on the surface mentioned (11.1).

13. Process in accordance with one of the claims 5 - 12, **characterized in that** in a crystal (11) several rib waveguides (4) are simultaneously produced.

14. Utilization of a rib waveguide in accordance with one of the claims 1 - 4 in optical frequency converters for frequency multiplication, sum frequency generation, difference frequency generation or opto-parametric oscillation or in electro-optical modulators, switches or directional couplers.

15. Light source with at least one primary light source (111, 121, 132) and at least one frequency converter, into which light emitted from the at least one primary light source (111, 121, 132) can be coupled, **characterized in that** the at least one frequency converter is a rib waveguide (4) in accordance with one of the claims 1 - 4.

16. Light source in accordance with claim 15, **characterized in that** the at least one primary light source (111, 121, 132) is a semiconductor diode laser (111), a solid-state laser (121), a waveguide laser (132) or a fibre laser.

17. Light source in accordance with claim 15 or 16, **characterized in that** the light emitted by the at least one primary light source (111, 121, 132) can be coupled into the at least one rib waveguide (4) directly or through an optical system (112).

18. Light source in accordance with one of the claims 15 - 17, **characterized in that** the at least one rib waveguide (4) has a first and second front side (113, 114) and that at least one of these front sides (113, 114) is provided with a reflecting - or anti-reflex coating.

## Revendications

1. Guide d'onde (4) fabriqué à partir d'un cristal optique non linéaire (11), comprenant une couche barrière (14), dans le cristal (11), dont l'indice de réfraction est inférieur à l'indice de réfraction du cristal (11) et qui limite le guide d'onde (4) dans une direction perpendiculaire à une certaine facette (11.1) du cristal (11), le matériau cristallin dans la couche barrière (14) étant chimiquement inchangé, mais physiquement changé, en ce que la couche barrière (14) contient des ions et présente des dégâts par rayonnement ciblés provoqués par la présence des ions, de manière à ce que son indice de réfraction soit inférieur à celui du cristal (11), **caractérisé en ce que** le guide d'onde (4) est réalisé comme un guide d'onde à bande ayant une nervure (41) sur ladite facette (11.1), les parois de la nervure (41) limitant le guide d'onde à bande (4) dans la direction parallèle à ladite facette (11.1) et la hauteur (h) de la nervure (41) au-dessus de ladite facette étant égale à au moins 0,5 µm (11.1).

2. Guide d'onde selon la revendication 1, **caractérisé en ce que** le cristal (11) est un oxyde ferroélectrique ou un borate.

3. Guide d'onde selon la revendication 1 ou 2, **caractérisé par** au moins une couche de recouvrement diélectrique (81), dont l'indice de réfraction est inférieur à l'indice de réfraction du cristal (11), sur la facette cristalline (11.1).

4. Guide d'onde selon l'une quelconque des revendications 1 à 3, **caractérisé en ce que** la nervure (41) est divisée dans la direction perpendiculaire à la facette cristalline (11.1) en deux ou plusieurs secteurs (101.1, 101.2) qui sont séparés par une ou plusieurs couches barrière (102).

5. Procédé de fabrication d'un guide d'onde (4) à partir d'un cristal optique non linéaire (11), comprenant une première étape consistant à :
a) fabriquer une couche barrière (14) dans le cristal (11) qui se trouve substantiellement en parallèle à une facette déterminée (11.1) du cristal (11), en ce que des ions avec une distribution de l'énergie définie et une dose définie sont implantés dans le cristal (11) à travers la facette déterminée (11.1), le cristal (11), les ions à implanter, la distribution de l'énergie de l'implantation et la dose de l'implantation étant sélectionnés de telle sorte que les ions implantés ne forment pas de lien chimique avec le matériau cristallin, mais modifient le cristal physiquement dans une zone de détérioration (14), en ce que les ions se fixent dans la zone de détérioration (14) et y provoquent de façon ciblée des dégâts par rayonnement permanents, de manière à ce que l'indice de réfraction de la zone de détérioration (14) soit diminué de façon permanente par rapport au cristal (11) ;
**caractérisé par** les autres étapes suivantes consistant à :
b) appliquer un masque (41) sur ladite facette (11.1) du cristal (11) ;
c) attaquer le cristal (11) à partir de ladite facette (11.1) afin de former une nervure (41) sur ladite facette (11.1) jusqu'à ce que la hauteur (h) de la nervure (41) au-dessus de ladite facette (11.1) s'élève à au moins 0,5 µm.

6. Procédé selon la revendication 5, **caractérisé en ce qu'**au cours de l'étape (a), la couche barrière (14) est fabriquée par l'implantation d'ions légers à haute énergie (12) dans le cristal.

7. Procédé selon la revendication 6, **caractérisé en ce qu'**au cours de l'étape (a), des ions de He⁺, des ions de He⁺⁺ ou des ions de H⁺ (12) d'une énergie de 0,3 MeV à 3 MeV sont utilisés.

8. Procédé selon l'une quelconque des revendications 5 à 7, **caractérisé en ce qu'**après l'étape (a) ou (c), le cristal est chauffé à une température élevée pour remédier à des défauts dans une zone (13) entre ladite facette (11.1) et la couche barrière (14).

9. Procédé selon l'une quelconque des revendications 5 à 8, **caractérisé en ce qu'**après l'étape (a) ou (c), un champ électrique extérieur est appliqué au cristal (11) pour réorienter des domaines ferroélectriques et pour polariser le cristal (11) suivant une direction indiquée.

10. Procédé selon l'une quelconque des revendications 5 à 9, **caractérisé en ce qu'**après l'étape (b), le masque (21) sur ladite facette (11.1) est fabriqué de façon photolithographique.

11. Procédé selon la revendication 10, **caractérisé en ce qu'**après l'étape (b), le masque (21) est durci par implantation d'ions, de façon chimique, par chauffage ou par irradiation à rayonnement ultraviolet.

12. Procédé selon l'une quelconque des revendications 5 à 9, **caractérisé en ce qu'**au cours de l'étape (b), le masque (21) est préstructuré séparément et posé sur ladite facette (11.1).

13. Procédé selon l'une quelconque des revendications 5 à 12, **caractérisé en ce que** dans un cristal (11) plusieurs guides d'onde à bande (4) sont fabriqués simultanément.

14. Utilisation du guide d'onde selon l'une quelconque des revendications 1 à 4 dans des convertisseurs de fréquence pour la multiplication de fréquences, la génération de fréquences cumulées, la génération de fréquences différentielles ou l'oscillation optoparamétrique ou dans des modulateurs, commutateurs ou coupleurs directifs électro-optiques.

15. Source de lumière comprenant au moins une source de lumière primaire (111, 121, 132) et au moins un convertisseur de fréquence, dans lesquels une lumière émise par ladite au moins une source de lumière primaire (111, 121, 132) peut être injectée, **caractérisée en ce que** ledit au moins un convertisseur de fréquence est un guide d'onde (4) selon l'une quelconque des revendications 1 à 4.

16. Source de lumière selon la revendication 15, **caractérisée en ce que** ladite au moins une source de lumière primaire (111, 121, 132) est un laser à diode semi-conductrice (111), un laser solide (121), un laser à guide d'onde (132) ou un laser à fibre.

17. Source de lumière selon la revendication 15 ou 16, **caractérisée en ce que** la lumière émise par ladite au moins une source de lumière primaire (111, 121, 132) peut être injectée directement ou par l'intermédiaire d'un système optique (112) dans ledit au moins un guide d'onde (4).

18. Source de lumière selon l'une quelconque des revendications 15 à 17, **caractérisée en ce que** ledit au moins un guide d'onde (4) présente des première et deuxième faces (113, 114) et au moins une de ces faces (113, 114) est munie d'un revêtement réfléchissant ou antiréfléchissant.
